# EUROPEAN PATENT SPECIFICATION

(11) **EP 3 422 841 B1**
(45) Date of publication and mention of the grant of the patent: **14.10.2020**
(21) Application number: 17704320.5
(22) Date of filing: 26.01.2017
(51) Int. Cl.: A01K 1/015

(54) **DEVICE FOR MAINTAINING FLOOR-COVERING MATERIAL PRESENT ON A BARN FLOOR**
VORRICHTUNG ZUR INSTANDHALTUNG VON STREU MATERIAL AM BODEN EINES STALLES
APPAREIL POUR LA MAINTENANCE DE LITIÈRE DISPOSÉE SUR LE SOL D'UNE ÉTABLE

(30) Priority: 01.03.2016 NL 2016346
(43) Date of publication of application: 09.01.2019
(73) Proprietor: Lely Patent N.V., 3147 PB Maassluis (NL)
(72) Inventor: REGELINK, Frank Gerard, 3147 PB Maassluis (NL); FRANSEN, Renatus Ignatius Josephus, 3147 PB Maassluis (NL); VAN DEN BERG, Karel, 3147 PB Maassluis (NL); VAN PAASSEN, Nicolaas Johannes Wilhelmus, 3147 PB Maassluis (NL)
(74) Representative: Octrooibureau Van der Lely N.V.
(86) International application number: PCT/NL2017/050053
(87) International publication number: WO 2017/150967

(56) References cited:
- EP-A1- 2 243 354
- WO-A1-2016/023716
- WO-A1-2016/036240
- DE-A1- 10 320 943
- US-A1- 2008 173 247

## Description

The invention relates in general to a device for maintaining floor-covering material present on the barn floor.

Known floor-covering materials include sawdust, wood chips, chopped straw, flax straw, manure fibers, and squeezed manure or so-called thick fraction. The floor-covering in a barn is then formed by scattering and spreading the selected floor-covering material onto the barn floor to form a floor-covering layer. The floor-covering material serves as a floor for the animals to lie, stand and walk on or similar, and to absorb the discharges, such as feces and urine, from the animals. In some barns, the floor of the entire living environment of the animals is covered with a floor-covering material. In cattle farming, such animal accommodation is known as a free-range barn. In other barns, only part of the living environment is covered with floor-covering material. Since the discharge from the animals falls onto the floor-covering material, this becomes soiled and must be maintained.

An example of a device for maintaining floor-covering material present on a barn floor is described in DE10320943 A1: this known device comprises a pick-up device, a press and a moisture receptacle, and means for separating manure from the floor-covering material, in particular from sawdust, and also delivering wet floor-covering material to the press and subjecting it to a press treatment. This known device also comprises a measuring device for determining the moisture content of the lifted floor-covering material. On the basis of determination of the moisture content, the lifted material is divided into two streams, wherein the wet material is supplied to a top sieve and the dry material to a bottom sieve. After the manure has been sieved out of the material, the wet material is squeezed.

In practice, the device presented in this document does not appear to be sufficient to maintain a floor-covering in good condition.

EP2243354A1 discloses an autonomously operable cleaning device for separating manure from bedding material which lies on the floor of a barn. A pick-up device in the form of two counter rotating discs picks up and lifts manure and litter material and feeds it to a sieve. The manure falls through the holes in the sieve and is collected. A temperature or odor sensor is provided for detecting the manure on the floor.

US20080173247A1 discloses an autonomous vehicle for detection, treatment and collection of excrements from a grassy surface. A sensor in front the vehicle detects the presence of the excrement on the surface and the vehicle hovers over the excrement to sweep the excrement from the surface and into a receptacle by means of an elongated rotatable brush.

An object of the invention is to propose an alternative device for maintaining floor-covering in a barn, which in particular is suitable for maintaining a floor-covering in a barn in which dairy cattle are accommodated. Another object of the invention is to provide a device which, in an economically feasible fashion, can create a pleasant living environment for the animals in the barn.

The proposed object is achieved by providing a device as claimed in claim 1.

The device according to the invention is able to maintain the floor-covering material efficiently because the measuring device determines a parameter value of the floor-covering material present on the barn floor, and because the pick-up device which may lift the material is controllable depending on the parameter value determined with the measuring device.

By controlling the pick-up device according to the invention on the basis of the parameter value determined by the measuring device before the material is lifted, choices may still be made at the pick-up device. According to the invention, namely, the pick-up device may be controlled. In this way, not only can it be determined whether the floor-covering material is lifted, but also how it is lifted. For example, by making the pick-up device controllable, the floor-covering material may be lifted depending on the parameter and returned directly to the barn floor, in contrast to the methods known from the prior art.

The rotatable tillage device as specified in the invention comprises a rotatable shaft with blades or hooks arranged thereon. The ends of the blades and or hooks determine the outer periphery of the workable part of the tillage device. In use, when the tillage device rotates, the blades and/or hooks come into contact with the floor-covering material. The blades and/or hooks lift the floor-covering material from the barn floor and carry it in the direction of the rotation movement, whereby the floor-covering material is detached from the floor by the tillage device, lifted and displaced.

The rotation direction of the tillage device, and in particular also a rotation speed, is adjustable by the control device depending on the parameter value.

By making the rotation adjustable, the quantity and displacement of the lifted floor-covering material may be controlled. Thus depending on the rotation direction of the tillage device relative to the direction in which the device moves forward, the lifted material is displaced largely under the tillage device or over the tillage device. If the tillage device rotates in the direction of movement of the device, like a wheel which travels in the direction of movement, the lifted floor-covering material is displaced under the tillage device. If, with the same direction of forward movement, the tillage device rotates differently and the rotation direction is thus opposite the movement direction of the device, the lifted floor-covering material is displaced over the tillage device. In this case, the material is lifted further from the barn floor than if the tillage device rotates with the direction of movement. This property may advantageously be used for maintaining the floor-covering material.

The rotation speed, or the revolution rate, of the tillage device affects both the quantity of floor-covering material lifted per time unit and the energy supplied to the floor-covering material.

At a lower or higher rotation speed, less or more energy respectively is supplied to the lifted floor-covering material, whereby it is flung less far or further away from the tillage device. In addition, with a contra-rotating tillage device with a high rotation speed, the material will land further from the tillage device.

Therefore the setting of the rotation direction and the rotation speed of the tillage device can provoke a controllable desired material flow of the lifted floor-covering material.

For example, if it appears from the parameter value that the floor-covering material is not soiled, the tillage device may be set such that the rotation direction is the same as the forward movement direction. In this way, the floor-covering material lifted by the tillage device will be displaced under the tillage device and, depending on the rotation speed, displaced to a greater or lesser extent relative to the forward movement direction of the device. In addition, the device then uses less energy. Note that the rotation speed must be higher than the forward movement speed in order to allow the tillage device to do its work, otherwise the tillage device will simply roll over the floor-covering material. Note that on displacement under the tillage device, the floor-covering material is not lifted or is scarcely lifted. With a high rotation speed, the floor-covering material will be thrown much further away. In another situation, for example if it appears from the parameter value that the floor-covering material is soiled, the tillage device may be set such that the rotation direction is opposite to the forward movement direction of the device, whereby the material can be guided through the device in order to be cleaned.

Note that if the device is not moving forward and the tillage device is rotating, the floor-covering material in the region of the tillage device will be lifted and displaced until there is no material left in the area of the tillage device. The forward movement of the device therefore also affects the function of the tillage device. It may also be advantageous to adjust the rotation speed of the tillage device relative to the forward movement speed of the device.

In one embodiment, the tillage device has an adjustable tilling depth, and the tilling depth is adjustable by the control device depending on the parameter value.

By setting the tilling depth, the quantity of material lifted by the tillage device may be controlled. Here it is possible, for example, to set the tillage device less deep for a specific parameter value, such as for example a parameter value which indicates that the floor-covering material is not soiled. Advantageously, this reduces the energy consumption of the device. In addition, the adjustable tilling depth may for example also be used to disable the tillage device, at least temporarily. The tilling depth should always be able to be returned on the basis of the parameter value to a tilling depth of 0, wherein the tillage device is no longer in contact with the floor-covering material. In such a position, no floor-covering material will be lifted. In this way therefore, it is possible to disable the tillage device during forward movement of the device, depending on the parameter value, and thus leave parts of the floor-covering material undisturbed.

In order to influence the displacement trajectory of material lifted with the contra-rotating tillage device, the tillage device advantageously comprises a protection over at least an upper part of the periphery of the tillage device. The protection determines, in any case partly, the trajectory along which the material lifted by the tillage device is displaced. In addition, by contact with the protection, the material is advantageously broken up so that any lifted clumps of settled material which may be present can be detached.

In one embodiment, the measuring device comprises at least one measuring instrument for determining the parameter value of the floor-covering material present on the barn floor and located upstream of the pick-up device, viewed in the proposed direction of forward movement.

By determining the parameter value of floor-covering material which is situated upstream of the pick-up device relative to the movement direction, even during forward movement of the device, the device can advantageously work efficiently. With such a configuration, wherein the floor-covering material to be lifted is located in front of the pick-up device, the floor-covering material may be lifted after the parameter value has been determined. The choice of position of the measuring instrument on the device in any case partly determines the area on the barn floor which the measuring instrument can sweep relative to the device. Naturally, the type of measuring instrument also plays a role here; some measuring instruments have a wider measurement area than other measuring instruments. However, the position of the measuring area relative to the device is determined by the position of the measuring instrument on the device. In this way, the operator may choose whether the measuring area should be created close to the pick-up device, such that the measured floor-covering material is lifted shortly after measurement. By minimizing the delay between measuring and lifting, the chance of the animals soiling the floor-covering material between measuring and lifting is also minimized.

Naturally, it is also possible to arrange the measuring device in a position on the device so that the parameter of the material already in contact with the pick-up device is measured. This may be achieved for example by integrating the measuring device with the pick-up device, such as for example with the blades and/or hooks of the tilling device. In this way, the time between measurement and pick-up may be even shorter, or even absent. The chance of intermediate soiling is then nil. Note that then the time between measurement and activation of the pick-up device depending on the parameter value also becomes shorter, or is limited to the time of processing of the material by the pick-up device.

In one embodiment, the measuring instrument comprises at least a measuring pin and a contacting device for, in usage, bringing or holding the measuring pin in contact with the floor-covering material
The term "measuring pin" means firstly an elongate object which may be brought into contact with the floor-covering material to be measured. The term "contacting device" means a device with which the pin, in usage, may be brought into or kept in contact with the floor-covering material. This also includes designing the pin to follow the floor, for example using a spring which presses the pin in the direction of the floor. Note that the term "follow the floor" in this context means following the surface of the floor-covering material to be measured, so that for an uneven material surface, the pin is kept continuously in contact with the material. Another way to make the pin follow the floor is to suspend the pin movably via a flexible element such as a cord, whereby the weight of the pin and gravity ensure that the pin follows the floor and remains in contact with the floor-covering material. Preferably, the floor-following pin is arranged effectively horizontally, with one end of the pin pointing downstream, i.e. against the proposed direction of movement of the device. In this way, the pin can be dragged over the top layer of the floor-covering material while following the floor. Instead of a pin which is held in floor-following contact with the surface of the floor-covering material, a pin may also be pushed into the floor-covering material like a probe. For this, the contacting device may also comprise a spring which presses the pin into the floor-covering material. Note that a vertical orientation of the pin is here advantageous. The term "following the floor" then relates to the insertion depth relative to the surface of the floor-covering material, which insertion depth may then be held constant. Alternatively, the pin may also be pushed into the material with intermediate pauses, whereby separate measurements can be taken. The insertion movement may for example be repeated by means of a camshaft.

Because the measuring pin with the contacting device is in contact with the material, the material can be measured better than when measuring devices are used with measuring instruments which have no contact with the floor-covering material. For example, near infrared (NIR) sensors or cameras work contactlessly, whereby a distorted picture of the state of the floor-covering material may be produced. Note that the measuring instrument and the measuring pin are mounted on the device, and in use the device is moved forward in a proposed direction. Therefore measurement may advantageously take place during the forward movement of the device.

In one embodiment, the measuring instrument comprises several measuring pins arranged transversely to a proposed direction of forward movement.

If the measuring instrument comprises several pins arranged transversely to the proposed forward movement direction, effectively a measuring rake can be formed which, on forward movement of the device, is moved over and/or through the floor-covering material. Thus the parameter value of a bar-shaped area of the floor-covering material may be determined continuously. Advantageously, the device can thus achieve a precise and continuous function. In addition, the working width of such a measuring rake can then be selected such that it corresponds to the working width of the pick-up device. In this way, the device can measure the floor-covering material in strips and establish the parameter value thereof.

The control device may be configured such that the values from the pins are processed into a single parameter value which is representative of the measured quantity of floor-covering material over a predefined distance over which the device has moved forward.

If the measuring device comprises several measuring pins arranged in a line next to each other, the instantaneous measurement values of the pins on the line may be converted into a single line value. The line values are then used to determine a single parameter value over an advanced distance, which is representative of the measured quantity of floor-covering material.

For certain types of measurement, such as for example measurement of a dielectric constant, conductivity or resistance or similar, the pins work as paired electrodes. Such paired measuring pins deliver one parameter value per pair. The pick-up device can then be controlled on the basis of the one parameter value, out of the total number of parameter values of the measurement pins, which exceeds or falls short of a limit value. For example, if the parameter value of a set of measurement pins indicates that the material is soiled, the device may be controlled on the basis of this value even if the parameter values of the other pins show a different value.

For the measurement types too, the operator may choose whether to allow the parameter value of one pin to guide the control of the pick-up device.

In certain embodiments, it is possible that in addition, the individual or paired parameter values are averaged into a single parameter value which is representative of the state of floor-covering material measured over a surface area, in particular the entire surface area provided with the floor-covering material. Here, namely, a picture of the condition of the total quantity of floor-covering can be obtained.

The condition of the total quantity of floor-covering may be translated into a key figure which is always processed. In this way, a progressive insight into the condition of the floor-covering can be obtained. From this, for example, the operating efficiency of the device can be concluded. A deterioration in condition may for example indicate that the device has a fault or defect. The control device may then be configured such that an alarm is given to the user.

In one embodiment, the parameter value is a moisture content.

The moisture content gives a good indication of the soiling of the floor-covering material. For example, a high moisture content is an indication that the floor-covering material is wet. This may be due to the presence of feces and/or urine or other fluids. For dairy cattle, it may also be milk. However in principle, the cause of the increased moisture content relative to a desired value is not relevant, and this parameter value may still be used to control the pick-up device in a desired fashion. The moisture content may be a derivative of a measurable property related to the moisture content, such as for example the content of dry substance, conductivity, electrical resistance, time-domain reflectometry (duration of an electromagnetic pulse along the measuring pins), or dielectric constant.

In one embodiment, the device also comprises a press which is arranged downstream of the pick-up device, and is also configured to deliver the lifted floor-covering material to the press depending on the parameter value.

By providing the device with a press downstream of the pick-up device, and configuring the device to deliver the lifted floor-covering material to the press depending on the parameter value, the device is ideally suited for maintaining the floor-covering material. The device may now naturally return the lifted material, either through the press or not, to the barn floor.

Controlling the device in this way also has the advantage that the device may deliver soiled floor-covering material to the press, and lift but not deliver to the press floor-covering material which is not soiled. In this way, the device can squeeze lifted soiled material, such as for example material which is too wet, and at the same time return to the barn floor lifted material which is not soiled, i.e. not via the press. In this way, the device can separate material which is not soiled but which is compacted. Lifting in any case separates the floor-covering material. Floor-covering material becomes compacted in use because animals walk over it and lie on it. Compacted floor-covering material is disadvantageous for the comfort of the animals. For dairy cows in particular, the comfort of the floor-covering material is important because the animals must be able to lie comfortably in order to chew the cud.

In one embodiment, the device also comprises an open space between the pick-up device and the press, and the pick-up device is also configured to deliver the lifted floor-covering material to the press over the open space, depending on the parameter value.

By providing an open space between the pick-up device and the press, and also configuring the pick-up device to deliver the lifted floor-covering material to the press over the open space, depending on the parameter value, the lifted material may be delivered over the open space to the press or returned via the open space to the barn floor. For example, a specific parameter value may be coupled to a floor-covering material which is too wet, and the device can thus identify wet material and the control device may then control the pick-up device to deliver the wet floor-covering material over the open space to the press. Another parameter value may for example be coupled to floor-covering material which is not soiled and which also meets another requirement, and the device may identify this good material as such, and the control device may then control the pick-up device to lift the good floor-covering material and not displace it over the open space, but after lifting return it to the barn floor. In this way, such good lifted material may be returned to the barn floor via a shorter path. In this way, lifted material which need not be sent to the press is displaced less far through the device, which has a favorable effect on the energy consumption of the press.

Advantageously, the control device may set the direction of rotation of the tillage device, depending on the parameter value, as opposite the movement direction of the device, whereby the lifted floor-covering material is displaced over the tillage device. With such a contra-rotating tillage device, by means of the rotation speed it can be determined how far the material is flung downstream by the tillage device, and hence whether or not the material follows a displacement trajectory which bridges the open space between the tillage device and the press. Advantageously, the press or part thereof is mounted on the device such that this intersects a material displacement trajectory which bridges the open space. By allowing the press or part thereof to intersect such a material displacement trajectory bridging the open space, the material which follows this material displacement trajectory on this setting of the tillage device may be captured by the press. Naturally, the distance between the pick-up device and the press, and hence the size of the open space, may be determined as a function of the displacement trajectories achievable by the pick-up device. It would however be pointless to make the open space larger than the maximum distance over which the pick-up device can displace the material. If a tillage device is used, it is therefore useful to determine which displacement trajectories of the floor-covering material can be achieved by the tillage device with the available tillage device settings. On this basis, the position of the press in the device may be determined, and hence which displacement trajectory is intersected, and hence the distance between the pick-up device on the press and the size of the open space.

In this embodiment of the invention, preferably a contra-rotating direction of the tillage device is selected because with a contra-rotation direction, the floor-covering material is displaced upward and over the tillage device. With such an opposing direction of rotation, it is furthermore sufficient to act on the rotation speed. Thus it is possible to increase the speed only if the parameter value indicates that material must be delivered to the press, and advantageously the energy consumption of the device may be reduced. Advantageously, the tillage device may be designed as an overtop tillage device which always has a contra-rotation direction, and the control system acts only on the rotation speed of the overtop tillage device. This makes controlling the device easier.

In one embodiment, the device also comprises a controllable bridging device which is configured for bridging at least part of the open space between the pick-up device and the press, depending on the parameter value.

By providing the device with a controllable bridging device which can bridge at least part of the distance between the pick-up device and the displacement device, the device can be made more reliable in operation. Research has shown that the floor-covering material does not always react in the same way to the operation of the pick-up device. For example, if the material is greatly soiled, it is heavier, whereby it follows a different displacement trajectory than expected on the basis of the pick-up device settings. In this way, it may occur that material cannot be delivered to the press sufficiently reliably. If the material is heavier, it may occur that the lifted material falls back onto the barn floor before it has reached the press from the pick-up device. In other words, the actual displacement trajectory is shorter, whereby the open space between the pick-up device and the press is greater than the distance over which the material can actually be displaced by the pick-up device in the direction of the press. The bridging device or control device may be configured to activate the bridging device depending on the parameter, whereby then at least part of the distance between the pick-up device and the press is bridged. In this way, for example, if the parameter value indicates that the material must be supplied to the press, the bridging device is always activated. In addition, the control device may also be configured to perceive the operating parameters of the pick-up device, such as for example the power consumption, and activate the bridging device partly depending thereon. For example, if the power consumption of the tillage device is higher than expected for the set rotation direction and rotation speed, and the parameter value indicates that the material must be delivered to the press, the bridging device may be enabled.

In one embodiment, the bridging device is a controllable material guide, for example in the form of a movable bridge. In inactive state, the bridge does not bridge the open space between the pick-up device and the press, but it does bridge this in the active state. In this way, in the inactive state, the bridging device allows the material to fall back onto the barn floor through the open space between the pick-up device, in particular between the tillage device, and the press. In the active state, this drop is not possible. The bridge may be designed as a type of swing bridge, lift bridge, draw bridge or similar between the pick-up device and the press, which can be moved between the inactive state and the active state.

In one embodiment, the device also comprises a controllable transport device configured for transporting the lifted floor-covering material over the open space to the press, depending on the parameter value.

The transport device may displace the floor-covering material it has received over the open space and deliver to the processing device. By making the transport device controllable, in a first control state this may deliver the material over the open space to the press, and in a second control state it may deliver the material to the open space. This can for example be achieved by configuring the transport device as an endless circulating conveyor with material carrier means, wherein in a first circulation direction, the material is transported in the direction of the press, and in the second circulation direction, it is transported in the direction of the open space.

In one embodiment, the transport device is mounted on the bridging device.

By mounting the transport device on the bridging device, when the bridging device is in the active state and at least bridges part of the open space between the pick-up device and the press, said transport device may deliver the material to the press.

Thus bidirectional control of the transport device is not required. The bridging device ensures that the open space is bridged or not.

In one embodiment, the pick-up device and/or the transport device may be configured movably, wherein in a first position the gap between the pick-up device and the press is not bridged, and in a second position the gap is at least partially bridged.

In one embodiment, the pick-up device is also the transport device, and in particular the tillage device is arranged displaceably on the device, with a controllable device for moving this between the first and the second position, such as for example using a cylinder.

In another embodiment, the transport device is a device separate from the pick-up device. This may be configured as a delivery device such as a conveyor belt, a feed conveyor or chain conveyor or similar.

In one embodiment, the parameter value is a moisture content and the lifted floor-covering material is delivered to the press if the moisture content is greater than 75%, in particular greater than 80%.

Research has shown that floor-covering material with a moisture content above 80% is too wet for animals to lie on, and is therefore delivered to the displacement device. Too wet a floor-covering has the disadvantage that the animals become dirty and cold. Preferably, material with a moisture content of over 75% is already supplied to the press.

The press may be designed as a roller press, a mortar press or similar. The material streams resulting from the press, such as for example moisture and the drier, squeezed floor-covering material, may be captured in a separate moisture receptacle and material receptacle in the form of tanks on the device. The captured moisture is preferably discharged from the device to a moisture receptacle and/or to the drains if present in a parking area. The captured, squeezed floor-covering material is then returned to the barn floor. The squeezed material may also be returned directly from the press, without first being captured in a tank. The advantage of a separate receptacle for the squeezed material is that the material can be distributed evenly over the barn floor from a buffer.

In one embodiment, the device also comprises a moisture supply device which is configured to supply moisture to the floor-covering material delivered to the press.

The moisture supply may be used to dampen material which is too dry and then squeeze this out. A desired moisture percentage may then be obtained by first wetting the material and then pressing it with a specific pressure. This pressure may be set once on commissioning of the device, and depend on the type and desired moisture content of the floor-covering material. Also, the addition of moisture makes it easier for the material to pass through the press.

Also, moisture may be used to rinse the lifted floor-covering material. Rinsing allows the contaminants, such as for example urine, to be better removed from the floor-covering material.

In one embodiment, the moisture supply device comprises a moisture reservoir with a moisture outlet which is activatable by the control means.

By locating the moisture outlet for example at the press inlet, or even in the press itself, moisture may be supplied to the material which is delivered to the press.

In one embodiment, the device is an autonomously mobile device, in particular an autonomous vehicle.

The invention also relates to a method according to claim 16, for maintaining a floor-covering material present on a barn floor, using a device according to the invention which is movable in the proposed direction over the barn floor, wherein the method comprises the following steps:
- determining a parameter value of the floor-covering material present on the barn floor,
- lifting the floor-covering material with a pick-up device,
- controlling the pick-up device depending on the parameter value.

The invention will now be explained in more detail below with reference to drawings which show non-limitative exemplary embodiments of the invention, in which the same reference numerals designate the same or comparable components, and in which:
- Figure 1 is a diagrammatic side view of the device according to the invention, with a pick-up device, a measuring device and a control device which is configured for controlling the pick-up device depending on the parameter value of the floor-covering material determined by the measuring device.
- Figures 2A and 2B are diagrammatic depictions of the device according to the invention, showing the material displacement trajectories achieved by the control device and pick-up device.
- Figure 3 is a diagrammatic depiction of an embodiment of the device according to the invention which comprises a controllable bridging device.
- Figure 4 is a diagrammatic depiction of an embodiment of the device according to the invention which comprises a controllable transport device.

As well as the embodiments of the device shown in the figures, other embodiments are conceivable. The description below should therefore be understood as a non-restrictive and purely illustrative account of the invention. Terms such as "over" and "under" should be understood with the normal orientation of the device as a starting point.

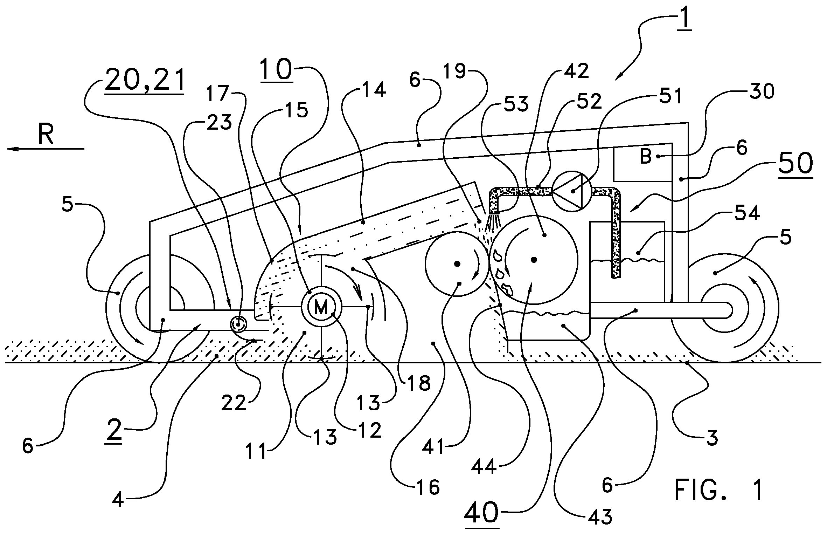

In figure 1, the device 1 is shown as mounted on an autonomous vehicle 2 on a barn floor 3, on which a layer of floor-covering material 4 is present. The vehicle 2 has at least three travel wheels 5 with which the vehicle is movable over the barn floor in a proposed direction. With such a three-wheeled design, preferably the front wheel is configured as the steered wheel. In addition, all wheels or merely the rear wheels may be driven. Furthermore, it is also possible to provide each wheel with its own controllable drive motor. This proposed direction is indicated by arrow R, and the rotation direction of the wheels is therefore shown as being counterclockwise. A frame 6 carries the various components of the vehicle and the device.

The device 1 shown in figure 1 comprises a pick-up device 10 for lifting floor-covering material 4, a measuring device 20 which is configured for determining a parameter value of the floor-covering material 4 present on the barn floor, and a control device 30 which is configured for controlling the pick-up device 10 depending on the parameter value.

The pick-up device 10 in the embodiment of figure 1 is a tillage device 11.

The tillage device has a rotatable shaft 12 with tillage device blades 13 arranged thereon and a material guide 14. A press 40 is arranged downstream of the cutter 11, wherein an open space 16 is situated between the tillage device and the press. The material guide 14 consists of a channel-like closed guide which extends from the tillage device to a press 40, and hence bridges the open space 16. On the edge of the tillage device, the material guide 14 has a tillage device protection 17 which protects at least the top left quadrant of the tillage device on the upstream side of the tillage device. This tillage device protection is connected to the underside of the channel-like material guide. In this way, the material lifted by the tillage device can be guided in the direction of the press. Furthermore, on its underside the material guide 14 has the closed channel, an outlet opening 18 next to the tillage device which is oriented towards the open space 16, and an outlet opening 19 next to the press which is oriented towards the press.

The ends 13A of the blades of the tillage device with which the floor-covering material is attacked extend to both sides. In this way, the blades of the tillage device can attack the floor-covering material irrespective of the rotation direction of the tillage device. The tillage device comprises a motor 15 with which the tillage device may be driven in rotation. The control device 30 is connected to the tillage device and is configured to adjust the rotation direction and/or rotation speed of the tillage device depending on the parameter value.

The tillage device may rotate both clockwise and counterclockwise; in other words it is configured bidirectionally. The rotation speed of the tillage device may also be adjusted. Figure 1 shows that the tillage device is rotating clockwise. In this case, the rotation direction is opposite the proposed direction in which the device R may move over the barn floor. In this way, the floor-covering material is displaced over the tillage device in the direction of the open space 16. If the tillage device rotates at sufficient speed in the opposite rotation direction, the floor-covering material is flung into the material guide 14 and emerges through the outlet opening 19 above the press 40. At a lower rotation speed, the material falls directly onto the barn floor downstream of the tillage device through the outlet opening 18 via the open space 16, and does not reach the press.

Also, the vehicle shown in figure 1 comprises a measuring device 20 for determining a parameter value of the floor-covering material present on the barn floor. The measuring device shown in figure 1 comprises a measuring instrument 21 which contains several measuring pins 22 which are arranged in a line over the width of the machine upstream and hence, in effectively horizontal orientation, are in contact with the floor-covering material in front of the tillage device 11. In this way, the floor-covering material is measured before the tillage device lifts it. The measuring pins 22 are arranged spring-mounted via a spring 23 on a holder or on the frame 6, this spring-mounting ensuring that the pins can remain in contact with the material during the forward movement, even on an uneven surface of the floor-covering material. The measuring device with the pins is configured to measure a parameter value related to the moisture content. It is also possible to measure other parameters which are not related to the moisture content. However to maintain the floor-covering, measurement of a parameter related to the moisture content is preferred, such as for example the resistance of the floor-covering material to electrical conduction, which is an indicator of the moisture content. Measuring devices for measuring parameters related to the moisture content are for example conductivity meters, resistance meters, induction meters, microwave moisture meters, near infrared meters (NIR, NIRS etc.) and similar.

The control device controls the function of the tillage device by adjusting the rotation direction and/or rotation speed and/or tilling depth depending on the parameter value. Figure 1 shows an embodiment in which the tillage device is set to rotate opposite the direction of forward movement R. This setting may for example be a standard setting, whereby the tillage device is not configured bidirectionally but as an overtop tillage device. For such a setting, and hence for a parameter value which indicates that the floor-covering material is not soiled, the control device may then set a rotation speed whereby a material displacement trajectory results in which the material is deposited directly behind the tillage device. The material is then indeed lifted by the tillage device and carried in the direction of the rotational movement of the tillage device, but is not delivered to the press. Also, figure 1 indicates by shading a material trajectory for which the floor-covering material is delivered from the tillage device to the press. Such a material displacement trajectory may be achieved by setting a high rotation speed of the tillage device. The control device may be configured such that such a higher rotation speed is selected for a parameter value which indicates that the floor-covering material is soiled.

The tilling depth of the tillage device is adjustable. For this, an adjustment means (not shown in the figures) is available which can adjust the tillage device relative to the frame so that the distance from the barn floor changes. In this way, the volume of the material flow may be adjusted.

The device preferably comprises a press 40. The press may squeeze the floor-covering material delivered to the press and thus remove undesirable moisture, such as for example urine. The press 40 in this embodiment is configured as a roller press with a roller set consisting of a contact roller 41 and a perforated hollow roller 42. As usual and known in roller presses in general, the contact roller is designed to deliver an adjustable pressure via the force with which the rollers are pressed against each other. This force, and hence the pressure, may be adjustable by means of a pressure arm or other element which presses the contact roller against its partner roller. The rollers of the press are rotatable and driven for example by means of a central motor with suitable transmissions and couplings. This is not shown in detail in the figures. A moisture receptacle 43 is arranged below the perforated roller 42. When the material is squeezed, the moisture is pressed into the perforated roller, whereupon it is captured in the moisture receptacle 43 below said roller. A material guide 44 ensures that the squeezed material does not reach the moisture receptacle 43 but lands on the barn floor. For this, the guide extends from a position slightly below the center of the perforated roller 42 in the direction of the floor. The material guide may also form part of the wall of the moisture receptacle. In an alternative embodiment, the squeezed floor-covering material may first be captured in a buffer space before being returned to the barn floor.

The vehicle 1 as shown in figure 1 also comprises a moisture supply device 50 with a pump 51, line 52 and moisture outlet 53. The pump 51 is arranged on (or in) a moisture reservoir 54 and can transport moisture from the moisture reservoir via the line 52 to the moisture outlet 53. The moisture outlet is located above the roller press 40. The control device 30 controls the supply of moisture by activating the pump and/or suitable flaps and/or valves. The activation may depend on the parameter value.

The moisture may be supplied in order to facilitate the squeezing of soiled floor-covering material. Moisture may also be added in order to control the moisture content in the pressed material, by wetting the floor-covering material and then pressing it with a specifically set pressure. In this way, the device can dampen material which is too dry and prevent the creation of dust in the barn. For the latter application, it is not necessary to supply the moisture to the material in the press, but a moisture outlet may also be provided at another location on the machine. Here, advantageously, a moisture outlet may be positioned which can spray moisture via the open space in the direction of the barn floor, wherein moisture can be supplied to the floor-covering material which is returned to the barn floor via the open space. In the embodiment shown in figure 1, the extra moisture outlet may then be mounted for example at the outlet opening 18 next to the tillage device 11. In addition, the moisture may be used to rinse the floor-covering material. For this, surplus moisture may be supplied, after which the material is squeezed. In this way, for example, urine may be flushed out of the soiled floor-covering material.

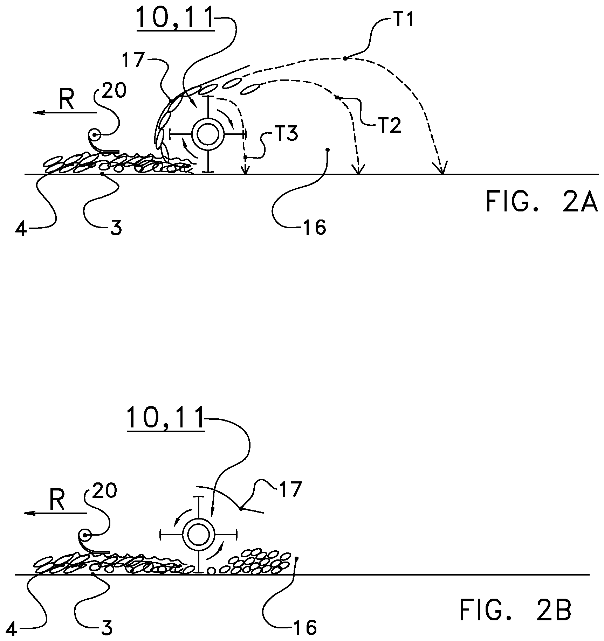

Figure 2A shows the pick-up device 10 as a tillage device 11 which rotates in the direction opposite the direction of forward movement R. A tillage device protection 17 is also arranged at the top left quadrant of the tillage device. Figure 2A also shows the measuring device 20, the barn floor with the floor-covering material thereon. Other parts of the device are not shown. As already described above, the rotation speed of the tillage device influences the material displacement trajectory of the lifted floor-covering material. In figure 2A, the displacement trajectories T1, T2 and T3 indicate that as the rotation speed of the tillage device diminishes, the material lands on the barn floor ever closer to the tillage device. The curve for displacement trajectory T1 shows that when the tillage device is rotating at high speed, the material is thrown up and falls down relatively far from the tillage device. This concerns relative speeds and distances; other parameters may also influence the displacement trajectory, such as the type and dimensions of the tillage device, the type and degree of soiling of the floor-covering material, and similar. When dimensioning the machine, it is important that the press, a part of the press or the material guide is mounted on the device such that for example it intersects the material displacement trajectory T3 or T2 which bridges the open space. The curve of trajectory T3 is the curve with a very low speed of the tillage device, wherein the material is essentially displaced only over the tillage device. Curve T3 is not therefore suitable for being intersected by the press or material guide, because that would prevent the material from falling down to the barn floor without having been captured by the press.

In knowledge of the possible material displacement trajectories of a tillage device, the device may be constructed such that, for example, the length of the open space 16 between the pick-up device and the press can be adjusted or determined. The larger the open space 16, or the further away the tillage device 11 is from the press 40, the more power the tillage device will need to be able to deliver the material to the press. For a barn with light floor-covering material where a low soiling level is expected (for example, because the animals have a lot of living space), with the same distance between tillage device and press, the tillage device requires less power. In the embodiment shown in figure 1, the length of the material guide channel 14 may therefore be determined as a function of the tillagepower, the type of floor-covering material, the expected degree of soiling, and similar.

Figure 2B shows the pick-up device 10 as a tillage device 11 which rotates with the same direction as the forward movement direction R. The tillage device protection 17 is here arranged at least at the top right quadrant of the tillage device. In this way, any material thrown up is conducted back down to the barn floor. In addition, a tillage device with such a rotation direction displaces the floor-covering material effectively under the tillage device. When a bidirectional tillage device is used, it is advantageous to select this rotation direction if the parameter value shows that the material need not be delivered to the press. With this rotation direction, the tillage device will not throw the material up high, whereby it is easier to select a setting with which the material does not reach the press arranged downstream. If the tillage device does throw up material, the guide 14 will ensure that it falls back to the barn floor.

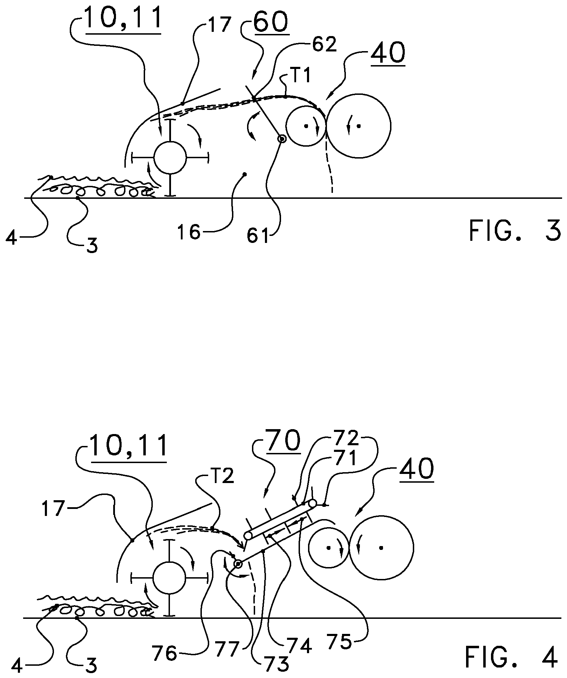

Figure 3 shows an embodiment with a contra-rotating tillage device 11 provided with a tillage device protection 17 at the top left quadrant of the tillage device. The tillage device will displace the material over the tillage device. The device also has a press 40 and an open space between the pick-up device 10, (the tillage device) and the press. Figure 3 also shows the material displacement trajectory T1 and a bridging device 60. Other parts of the device are not shown.

The bridging device 60 is arranged on the device on at least part of the open space 16 between the tillage device 11 and the press 40. The control device (not shown in figure 3) is also configured for controlling the bridging device depending on the parameter. The bridging device 60 as shown in figure 3 is a flap 62 which is movable about a hinge point 61. The flap can move between an active position in which the open space 16 or at least part thereof is bridged, and an inactive state in which the open space is not bridged. In the inactive state, the flap 62 prevents the floor-covering material which follows the displacement trajectory T1 from reaching the press. The flap now forms a barrier which intersects the displacement trajectory, and the material which is flung against the flap falls down via the open space to the barn floor. The control device may control the flap on the basis of the parameter value. For example, the control device moves the flap into the inactive and hence blocking state when the parameter value indicates that the material need not be delivered to the press.

If the material should however be delivered to the press, the flap is moved into the active bridging state. In this way, the flap no longer intersects the material displacement trajectory T1, and material leaving the tillage device is not blocked but delivered to the press. Note that here, the rotation speed of the tillage device in any case must be sufficient to allow the floor-covering material to follow the displacement trajectory T1.

Figure 4 shows an embodiment of the device with a contra-rotating tillage device 11 provided with a tillage device protection 17 at the top left quadrant of the tillage device. The tillage device displaces the material over the tillage device. The device also has a press 40 and an open space 16 between the pick-up device 10, (the tillage device 11) and the press. Figure 4 also shows the material displacement trajectory T2 and a transport device 70. Other parts of the device are not shown.

The controllable transport device 70 is configured for transporting the lifted floor-covering material over the open space 16 to the press 40. In figure 4, the transport device is shown as an endless circulating conveyor 71 with material carrier means 72 and a protection 73. The conveyor has bidirectional control and can move both in a first circulation direction, for example counterclockwise, and in a second circulation direction, for example clockwise. When the conveyor is travelling in the first circulation direction indicated by arrow 74, the material captured thereon is delivered to the press. When the conveyor is moving in the second circulation direction indicated with arrow 75, the material captured thereon is delivered to the barn floor via the open space 16. The protection is provided by a protection flap 76 which is movable about a protection rotation point 77. This flap stands in an upward-oriented capture position when the conveyor is moving in the first circulation direction. In this way, the material ejected from the tillage device is captured. Even if the material from the tillage device lands on the conveyor, it cannot be detached on the underside of the protection during the circulating movement because the flap is in the upward-oriented position. If it is desirable for the material displaced by the tillage device to be guided via the open space to the barn floor, the flap is moved into the downward-oriented discharge situation and the conveyor is moved in the second circulation direction.

In an alternative embodiment, not shown in the figures, a transport device may be arranged on a movable bridging device. By mounting the transport device on the bridging device, when the bridging device is in the active state and at least part of the open space between the pick-up device and the press is bridged, the transport device may deliver material to the press.

In this way, a bidirectional control of the transport device is not necessary. The bridging device always ensures that the open space is bridged or not bridged.

In one embodiment, not shown in the figures, the pick-up device and/or the press may be mounted movably on the device, whereby the distance between the pick-up device and the press is adjustable. For example, via a transport line arranged on a frame of the device, the tillage device may move into another position on the frame relative to the press.

It will be clear to the person skilled in the art that the scope of the invention is not restricted by the examples discussed above, but that many variations and modifications thereof are possible without deviating from the scope of the invention as defined in the attached claims.

## Claims

1. A device which is moveable over a barn floor (3) in a proposed direction for maintaining floor-covering material (4) present on the barn floor (3), comprising:
• a measuring device (20) which is configured to determine a parameter value of the floor-covering material (4) present on the barn floor (3), and
• a pick-up device (10) configured to lift floor-covering material (4) from the barn floor (3), and
• a control device (30) actively connected to the measuring device (20) and configured to control the pick-up device (10) depending on the parameter value,
wherein the pick-up device (10) comprises a rotatable tillage device (11),
wherein the rotation direction of the tillage device (11) is adjustable by the control device (30) depending on the parameter value, said parameter value being a moisture content, wherein the rotatable tillage device comprises a rotatable shaft with blades or hooks arranged thereon, wherein the ends of the blades and/or hooks determine the outer periphery of the workable part of the tillage device.

2. The device as claimed in claim 1, wherein the rotation speed of the tillage device (11) is adjustable by the control device (30) depending on the parameter value.

3. The device as claimed in claim 1 or 2, wherein the tillage device (11) has an adjustable tilling depth, and the tilling depth is adjustable by the control device (30) depending on the parameter value.

4. The device as claimed in one of the preceding claims, wherein the measuring device (20) comprises at least one measuring instrument (21) for determining the parameter value of floor-covering material (4) present on the barn floor (3) and located upstream of the pick-up device (10), viewed in the proposed direction of forward movement.

5. The device as claimed in one of the preceding claims, wherein the measuring instrument (21) comprises at least a measuring pin (22) and a contacting device for, in usage, bringing or holding the measuring pin (22) in contact with the floor-covering material (4).

6. The device as claimed in one of the preceding claims, wherein the measuring instrument (21) comprises several measuring pins (22) arranged transversely to a proposed direction of forward movement.

7. The device as claimed in one of the preceding claims, wherein the device (1) also comprises a press (40) which is arranged downstream of the pick-up device (10), and is also configured to deliver the lifted floor-covering material (4) to the press (40), depending on the parameter value.

8. The device as claimed in claim 7, which also comprises an open space between the pick-up device (10) and the press (40), and wherein the pick-up device (10) is also configured to deliver the lifted floor-covering material (4) to the press (40) over the open space, depending on the parameter value.

9. The device as claimed in claim 8, wherein the device (1) also comprises a controllable bridging device (60) which is configured for bridging at least part of the open space between the pick-up device (10) and the press (40), depending on the parameter value.

10. The device as claimed in one of claims 8 or 9, wherein the device (1) also comprises a controllable transport device (70) configured for transporting the lifted floor-covering material (4) over the open space to the press (40), depending on the parameter value.

11. The device as claimed in claim 10, wherein the transport device (70) is mounted on the bridging device (60).

12. The device as claimed in one of the preceding claims 7-11, wherein the device (1) also comprises a moisture supply device (50) which is configured to supply moisture to the floor-covering material (4) delivered to the press (40).

13. The device as claimed in claim 12, wherein the moisture supply device (50) comprises a moisture reservoir (54) with a moisture outlet (53) which is activatable by the control means (30).

14. The device as claimed in one of the preceding claims 8-13, wherein the parameter value is a moisture content and the lifted floor-covering material (4) is supplied to the press (40) if the moisture content is more than 80%, in particular more than 85%.

15. The device as claimed in one of the preceding claims, wherein the device (1) is an autonomously mobile device, in particular an autonomous vehicle.

16. Method for maintaining a floor-covering material (4) present on a barn floor (3), using a device (1) according to any of the preceding claims which is movable in the proposed direction over the barn floor (3), wherein the method comprises the following steps:
• determining with the measuring device (20) a parameter value of the floor-covering material (4) present on the barn floor (3),
controlling the pick-up device (10) for lifting floor-covering material (4) depending on the parameter value.

## Patentansprüche

1. Vorrichtung, die über einen Stallboden (3) in einer vorgeschlagenen Richtung zur Instanthaltung von Streumaterial (4) bewegbar ist, welches auf dem Stallboden (3) vorhanden ist, umfassend:
• eine Messvorrichtung (20), die ausgelegt ist, um einen Parameterwert des Streumaterials (4) zu ermitteln, das auf dem Stallboden (3) vorhanden ist, und
• eine Aufhebevorrichtung (10), die ausgelegt ist, um Streumaterial (4) von dem Stallboden (3) anzuheben, und
• eine Steuervorrichtung (30), die aktiv mit der Messvorrichtung (20) verbunden ist und ausgelegt ist, um die Aufhebevorrichtung (10) in Abhängigkeit von dem Parameterwert zu steuern, wobei die Aufhebevorrichtung (10) eine rotierbare Bodenbearbeitungsvorrichtung (11) umfasst,
wobei die Rotationsrichtung der Bodenbearbeitungsvorrichtung (11) durch die Steuervorrichtung (30) in Abhängigkeit von dem Parameterwert anpassbar ist, wobei der Parameterwert ein Feuchtigkeitsgehalt ist,
wobei die rotierbare Bodenbearbeitungsvorrichtung eine rotierbare Welle mit Klingen oder Haken umfasst, die darauf angeordnet sind, wobei die Enden der Klingen und/oder Haken den äußeren Umfang des arbeitsfähigen Teils der Bodenbearbeitungsvorrichtung bestimmen.

2. Vorrichtung nach Anspruch 1, wobei die Rotationsgeschwindigkeit der Bodenbearbeitungsvorrichtung (11) durch die Steuervorrichtung (30) in Abhängigkeit von dem Parameterwert anpassbar ist.

3. Vorrichtung nach Anspruch 1 oder 2, wobei die Bodenbearbeitungsvorrichtung (11) eine anpassbare Bodenbearbeitungstiefe hat, und die Bodenbearbeitungstiefe durch die Steuervorrichtung (30) in Abhängigkeit von dem Parameterwert anpassbar ist.

4. Vorrichtung nach einem der vorhergehenden Ansprüche, wobei die Messvorrichtung (20) mindestens ein Messinstrument (21) zum Ermitteln des Parameterwerts des Streumaterials (4) umfasst, das auf dem Stallboden (3) vorhanden ist, und sich vorgeordnet zu der Aufhebevorrichtung (10) befindet, gesehen in der vorgeschlagenen Richtung der Vorwärtsbewegung.

5. Vorrichtung nach einem der vorhergehenden Ansprüche, wobei das Messinstrument (21) mindestens einen Messstift (22) und eine Kontaktierungsvorrichtung umfasst, um bei Gebrauch den Messstift (22) in Kontakt mit dem Streumaterial (4) zu bringen oder zu halten.

6. Vorrichtung nach einem der vorhergehenden Ansprüche, wobei das Messinstrument (21) mehrere Messstifte (22) umfasst, die quer zu einer vorgeschlagenen Richtung der Vorwärtsbewegung angeordnet sind.

7. Vorrichtung nach einem der vorhergehenden Ansprüche, wobei die Vorrichtung (1) auch eine Presse (40) umfasst, die nachgeordnet zu der Aufhebevorrichtung (10) angeordnet ist und auch ausgelegt ist, um in Abhängigkeit von dem Parameterwert das angehobene Streumaterial (4) an die Presse (40) abzugeben.

8. Vorrichtung nach Anspruch 7, die auch einen offenen Raum zwischen der Aufhebevorrichtung (10) und der Presse (40) umfasst, und wobei die Aufhebevorrichtung (10) auch ausgelegt ist, um in Abhängigkeit von dem Parameterwert das angehobene Streumaterial (4) über den offenen Raum an die Presse (40) abzugeben.

9. Vorrichtung nach Anspruch 8, wobei die Vorrichtung (1) auch eine steuerbare Brückenvorrichtung (60) umfasst, die ausgelegt ist, um in Abhängigkeit von dem Parameterwert mindestens einen Teil des offenen Raums zwischen der Aufhebevorrichtung (10) und der Presse (40) zu überbrücken.

10. Vorrichtung nach einem der Ansprüche 8 oder 9, wobei die Vorrichtung (1) auch eine steuerbare Transportvorrichtung (70) umfasst, die ausgelegt ist, um in Abhängigkeit von dem Parameterwert das angehobene Streumaterial (4) über den offenen Raum zu der Presse (40) zu transportieren.

11. Vorrichtung nach Anspruch 10, wobei die Transportvorrichtung (70) auf der Brückenvorrichtung (60) montiert ist.

12. Vorrichtung nach einem der vorhergehenden Ansprüche 7 bis 11, wobei die Vorrichtung (1) auch eine Feuchtigkeitszufuhrvorrichtung (50) umfasst, die ausgelegt ist, um dem Streumaterial (4), das an die Presse (40) abgegeben wird, Feuchtigkeit zuzuführen.

13. Vorrichtung nach Anspruch 12, wobei die Feuchtigkeitszufuhrvorrichtung (50) ein Feuchtigkeitsreservoir (54) mit einem Feuchtigkeitsauslass (53) umfasst, der durch das Steuermittel (30) aktivierbar ist.

14. Vorrichtung nach einem der vorhergehenden Ansprüche 8 bis 13, wobei der Parameterwert ein Feuchtigkeitsgehalt ist und das angehobene Streumaterial (4) der Presse (40) zugeführt wird, falls der Feuchtigkeitsgehalt mehr als 80 % beträgt, insbesondere mehr als 85 %.

15. Vorrichtung nach einem der vorhergehenden Ansprüche, wobei die Vorrichtung (1) eine autonom mobile Vorrichtung ist, insbesondere ein autonomes Fahrzeug.

16. Verfahren zum Instandhalten eines Streumaterials (4), das auf einem Stallboden (3) vorhanden ist, unter Verwendung einer Vorrichtung (1) gemäß einem der vorhergehenden Ansprüche, die in der vorgeschlagenen Richtung über den Stallboden (3) bewegbar ist, wobei das Verfahren die folgenden Schritte umfasst:
• Ermitteln eines Parameterwerts des Streumaterials (4), das auf dem Stallboden (3) vorhanden ist, mit der Messvorrichtung (20),
• Steuern der Aufhebevorrichtung (10) zum Anheben von Streumaterial (4) in Abhängigkeit von dem Parameterwert.

## Revendications

1. Dispositif qui peut être déplacé sur le sol d'une étable (3) dans une direction souhaitée pour entretenir un matériau de litière (4) présent sur le sol de l'étable (3), comprenant :
un dispositif de mesure (20) qui est configuré pour déterminer une valeur de paramètre du matériau de litière (4) présent sur le sol de l'étable (3), et
un dispositif de saisie (10) conçu pour soulever le matériau de litière (4) du sol de l'étable (3), et
un dispositif de commande (30) connecté en fonctionnement au dispositif de mesure (20) et configuré pour commander le dispositif de saisie (10) en fonction de la valeur du paramètre, dans lequel le dispositif de saisie (10) comprend un dispositif rotatif de travail du sol (11),
dans lequel le sens de rotation du dispositif de travail du sol (11) peut être réglé par le dispositif de commande (30) en fonction de la valeur du paramètre, ladite valeur de paramètre étant une teneur en humidité,
dans lequel le dispositif rotatif de travail du sol comprend un arbre rotatif doté de lames ou de crochets disposés dessus, dans lequel les extrémités des lames et/ou des crochets déterminent la périphérie externe de la partie de travail du dispositif de travail du sol.

2. Dispositif selon la revendication 1, dans lequel la vitesse de rotation du dispositif de travail du sol (11) peut être réglée par le dispositif de commande (30) en fonction de la valeur du paramètre.

3. Dispositif selon la revendication 1 ou 2, dans lequel le dispositif de travail du sol (11) présente une profondeur de travail du sol réglable, et la profondeur de travail du sol peut être réglée par le dispositif de commande (30) en fonction de la valeur du paramètre.

4. Dispositif selon l'une quelconque des revendications précédentes, dans lequel le dispositif de mesure (20) comprend au moins un instrument de mesure (21) servant à déterminer la valeur de paramètre du matériau de litière (4) présent sur le sol de l'étable (3) et situé en amont du dispositif de saisie (10), vu dans la direction souhaitée de déplacement vers l'avant.

5. Dispositif selon l'une quelconque des revendications précédentes, dans lequel l'instrument de mesure (21) comprend au moins une aiguille de mesure (22) et un dispositif de contact servant, en utilisation, à amener ou retenir l'aiguille de mesure (22) en contact avec le matériau de litière (4).

6. Dispositif selon l'une quelconque des revendications précédentes, dans lequel l'instrument de mesure (21) comprend plusieurs aiguilles de mesure (22) disposées transversalement à une direction souhaitée de déplacement vers l'avant.

7. Dispositif selon l'une quelconque des revendications précédentes, le dispositif (1) comprenant en outre une presse (40) qui est disposée en aval du dispositif de saisie (10), et étant en outre conçu pour délivrer le matériau de litière soulevé (4) à la presse (40) en fonction de la valeur du paramètre.

8. Dispositif selon la revendication 7, comprenant en outre un espace ouvert entre le dispositif de saisie (10) et la presse (40), et dans lequel le dispositif de saisie (10) est en outre conçu pour délivrer le matériau de litière soulevé (4) à la presse (40) par-dessus l'espace ouvert en fonction de la valeur du paramètre.

9. Dispositif selon la revendication 8, le dispositif (1) comprenant en outre un dispositif contrôlable de raccordement en pont (60) qui est conçu pour raccorder en pont au moins une partie de l'espace ouvert entre le dispositif de saisie (10) et la presse (40) en fonction de la valeur du paramètre.

10. Dispositif selon l'une quelconque des revendications 8 et 9, le dispositif (1) comprenant en outre un dispositif de transport contrôlable (70) conçu pour transporter le matériau de litière soulevé (4) par-dessus l'espace ouvert vers la presse (40) en fonction de la valeur du paramètre.

11. Dispositif selon la revendication 10, dans lequel le dispositif de transport (70) est monté sur le dispositif de raccordement en pont (60).

12. Dispositif selon l'une quelconque des revendications 7 à 11, le dispositif (1) comprenant en outre un dispositif de distribution d'humidité (50) qui est conçu pour distribuer de l'humidité au matériau de litière (4) délivré à la presse (40).

13. Dispositif selon la revendication 12, dans lequel le dispositif de distribution d'humidité (50) comprend un réservoir d'humidité (54) doté d'une sortie d'humidité (53) qui peut être activée par le moyen de commande (30).

14. Dispositif selon l'une quelconque des revendications 8 à 13, dans lequel la valeur de paramètre est une teneur en humidité et le matériau de litière soulevé (4) est fourni à la presse (40) si la teneur en humidité est supérieure à 80 %, en particulier supérieure à 85 %.

15. Dispositif selon l'une quelconque des revendications précédentes, le dispositif (1) étant un dispositif mobile autonome, en particulier un véhicule autonome.

16. Procédé d'entretien d'un matériau de litière (4) présent sur le sol d'une étable (3) au moyen d'un dispositif (1) selon l'une quelconque des revendications précédentes qui peut se déplacer dans la direction souhaitée sur le sol de l'étable (3), le procédé comprenant les étapes suivantes :
la détermination au moyen du dispositif de mesure (20) d'une valeur de paramètre du matériau de litière (4) présent sur le sol de l'étable (3),
la commande du dispositif de saisie (10) pour soulever le matériau de litière (4) en fonction de la valeur du paramètre.
